# EUROPEAN PATENT SPECIFICATION

(11) **EP 4 320 401 B1**
(45) Date of publication and mention of the grant of the patent: **04.06.2025**
(21) Application number: 22718525.3
(22) Date of filing: 05.04.2022
(51) Int. Cl.: F41H 5/04

(54) **LIGHT WEIGHT COMPOSITE BALLISTIC ARMOR**
LEICHTGEWICHTIGE BALLISTISCHE VERBUNDPANZERUNG
BLINDAGE BALISTIQUE COMPOSITE LÉGER

(30) Priority: 06.04.2021 US 202163171330 P; 04.04.2022 US 202217657897
(43) Date of publication of application: 14.02.2024
(73) Proprietor: US Armor Forge Inc., Mesa, AZ 85207 (US)
(72) Inventor: MORIARTY, Forest, J., Mesa, AZ 85207 (US); WILLIAMS, Aaron, Patrick, Mesa, AZ 85207 (US)
(74) Representative: Murgitroyd & Company
(86) International application number: PCT/US2022/023450
(87) International publication number: WO 2022/216686

(56) References cited:
- WO-A1-2019/162683
- GB-A- 2 571 291
- GB-A- 2 571 292

## Description

### RELATED APPLICATION

The present application relates to and claims the benefit of priority to United States Non- Provisional Patent Application no. 17/657897 filed 04 April 2022 and United States Provisional Patent Application no. 63/171330 filed 06 April 2021.

### BACKGROUND OF THE INVENTION

### Field of the Invention.

Embodiments of the present invention relate, in general, to personal protection equipment and more particularly to light weight composite ballistic armor.

### Relevant Background

Body armor is protective clothing designed to absorb or deflect physical attacks. While it is primarily associated with bulletproof and ballistic vests, it covers a wide range of protective equipment that can cover many different parts of the body. Historically used to protect military personnel, today it is also used by various types of law enforcement, private security, and civilians. There are two main types of armor: regular non-plated armor, also known as soft armor, and plate-reinforced armor, also known as hard plate armor. While each type of armor is rated to National Institute of Justice (NIJ) standards, neither adequately addresses current needs.

As mentioned, armor can be characterized as soft or plate-reinforced armor. Soft armor such as Aramid carbon fiber (Kevlar^{®} ) is effective at protecting against certain types of ballistic threats and is lightweight and flexible. Aramid carbon fiber however is largely ineffective against knives and the like and does not diminish the concussive effect of an incoming projectile.

Ceramic plates are a common component of plate-reinforced armor. Ceramic plates, when undamaged, are effective at stopping ballistic threats, but they are relatively brittle and even minor repeated impacts can eventually cause the formation of small cracks, resulting in plate failure. These cracks, which are difficult to detect, and indeed may only be visible under x-ray examination, significantly reduce the plates' effectiveness. The efficacy of ceramic plates is also degraded by prolonged water exposure, and a vest or other plate carrier with an Aramid backer is always vulnerable to water. Prolonged exposure to high salinity water, e.g ., seawater, can lead to penetration failures.

Stand-alone steel armor, like AR500 armor steel, is another example of currently used plate-reinforced armor. Steel armor must be thick to be effective against ballistic threats, causing each plate to weigh more than 8 to 9 pounds. Moreover, AR500 armor, like other high-carbon steel armor, requires a post process layering system to prevent life threatening spalling. As will be appreciated by one of reasonable skill in the relevant art, spalling is when a ballistic object such as a bullet shatters and fragments ricochet off the armor surface.

Being the thickest of all current armor solutions, stand-alone polyethene, while lightweight, receives common complaints that it is "extremely bulky" to wear. To adequately prevent ballistic penetration, polyethene armor is of a thickness that makes movement and agility problematic even for the most athletic personnel. Polyethylene armor plates often exceed one inch (25,4 mm) in thickness.
WO2019162683 describes a composite structure comprising a protective structure comprising a plurality of ballistic layers arranged as a stack; and an ancillary structure adjacent to the protective structure adapted to at least partly absorb a force acting on the protective structure. The ancillary structure comprises at least one first layer comprising an aerogel arranged to at least partly absorb a force acting on the protective structure. A part of each ballistic layer is moveable relative to at least one adjacent ballistic layer and wherein a part of each ballistic layer is connected to at least one adjacent ballistic layer so as to restrict relative movement of a part of each of the adjacent ballistic layers.

Therefore, a need exists for a highly effective, lightweight, thin protective armor that equals or exceeds current technology for effectiveness against ballistic threats, while enabling the user to operate in a variety of conditions without sacrificing mobility and providing increased resistance to operational and environmental degradation. These and other deficiencies of the prior art are addressed by one or more embodiments of the present invention.

Additional advantages and novel features of this invention shall be set forth in part in the description that follows, and in part will become apparent to those skilled in the art upon examination of the following specification or may be learned by the practice of the invention. The advantages of the invention may be realized and attained by means of the instrumentalities, combinations, compositions, and methods particularly pointed out in the appended claims.

### SUMMARY OF THE INVENTION

Accordingly there is provided a composite ballistic resistant article as detailed in claim 1. Such a heat-resistant synthetic material composite article (shell), infused with graphene resin, may encompass a ballistic core comprising high-density, lightweight Grade 5 Titanium (Ti6A14V) and NIJ Level 3a rated UHMWPE (Ultra-high-molecular- weight polyethylene). In embodiments of the disclosed invention, the titanium plate has a thickness ranging from 3mm to 5mm and is paired with a polyethylene plate with a thickness ranging from 6mm to 12mm. In some embodiments, a layer of absorbing material for high energy impacts is included for additional energy absorption and back face deformation (BFD) control.

One version of a composite ballistic resistant article includes one or more layers of synthetic aromatic polyamide polymer-based fabric combined with one or more graphene layers wherein each graphene layer is a single layer of carbon atoms arranged in a hexagonal lattice and wherein a graphene resin infuses into and binds the one or more layers of synthetic aromatic polyamide polymer-based fabric to the one or more graphene layers. As the composite ballistic resistant article is formed the graphene resin encompasses and infuses the aromatic polyamide polymer-based fabric with one or more graphene layers creating the article.

Another version of the composite ballistic resistant article includes one or more polyethylene layers interposed between one of the one or more layers of synthetic aromatic polyamide polymer-based fabric and the graphene layers. The polyethylene layer is in one instance UHMWPE or similar ultra-high molecular weight polyethylene. Another version of the present invention includes a titanium plate interposed between one of the one or more layers of synthetic aromatic polyamide polymer-based fabric and one of the one or more graphene layers.

The composite ballistic resistant article of the present invention includes an outward facing side and an inward facing side and, with respect to the outward facing side, the titanium plate is positioned before the one or more polyethylene layers. Moreover, the one or more layers of synthetic aromatic polyamide polymer-based fabric, the one or more graphene layers, the one or more polyethylene layers, and the titanium plate combine into a single multi-curve ballistic resistant article. In each case, graphene infused resin is interposed between each of the one or more layers of synthetic aromatic polyamide polymer-based fabric, the one or more graphene layers, the one or more polyethylene layers, and the titanium plate binding them together.

Another version of the composite ballistic resistant article of the present invention includes a backer plate positioned, with respect to the outward facing side, after the one or more polyethylene layers, composed of a high energy capacity absorbing material to distribute across the surface of the wearer energy of an impact. In the same consideration of energy distribution, the composite ballistic resistant article is configured as multi-curve plate.

Another aspect of the present invention is a method for forming composite ballistic resistant article as detailed in the independent claim 11. Such a method includes binding, by a graphene infused resin, one or more layers of synthetic aromatic polyamide polymer-based fabric to one or more graphene layers wherein each graphene layer is a single layer of carbon atoms arranged in a hexagonal lattice. The resin includes, in one embodiment, graphene and/or graphene platelets, that as the resin cures, forms one or more graphene layers. The method also includes interposing one or more polyethylene layers between one of the one or more layers of synthetic aromatic polyamide polymer-based fabric and one of the one or more graphene layers and/or interposing a titanium plate between the one of the one or more layers of synthetic aromatic polyamide polymer-based fabric and one of the one or more graphene layers.

The composite ballistic resistant article is formed such that it includes outward facing side and an inward facing side and wherein, and with respect to the outward facing side, positioning the titanium plate before the one or more polyethylene layers. In other versions the formation of the composite ballistic resistant article includes combining the one or more layers of synthetic aromatic polyamide polymer-based fabric, the one or more graphene layers, the one or more polyethylene layers, and the titanium plate into a single multi-curve ballistic resistant article. Graphene infused resin is interposed between each of the one or more layers of synthetic aromatic polyamide polymer-based fabric, the one or more graphene layers, the one or more polyethylene layers, and the titanium plate.

The features and advantages described in this disclosure and in the following detailed description are not all-inclusive. Many additional features and advantages will be apparent to one of ordinary skill in the relevant art in view of the drawings, specification, and claims hereof. Moreover, it should be noted that the language used in the specification has been principally selected for readability and instructional purposes and may not have been selected to delineate or circumscribe the inventive subject matter; reference to the claims is necessary to determine such inventive subject matter.

### BRIEF DESCRIPTION OF THE DRAWINGS

The aforementioned and other features and objects of the present invention and the manner of attaining them will become more apparent, and the invention itself will be best understood, by reference to the following description of one or more embodiments taken in conjunction with the accompanying drawings, wherein:
Figure 1A shows a front view of an armor plate comprising an embodiment of the disclosed invention;
Figure 1B shows a top view of an armor plate comprising an embodiment of the disclosed invention;
Figure 1C shows a side view of an armor plate comprising an embodiment of the disclosed invention;
Figure 2 shows a side view of an armor plate comprising an embodiment of the disclosed invention;
Figure 3 shows a side view of an armor plate comprising an embodiment of the disclosed invention;
Figures 4A and 4B show a side view of an armor plate comprising embodiments of the disclosed invention;

The Figures depict embodiments of the present invention for purposes of illustration only. Like numbers refer to like elements throughout. In the figures, the sizes of certain lines, layers, components, elements, or features may be exaggerated for clarity. One skilled in the art will readily recognize from the following discussion that alternative embodiments of the structures and methods illustrated herein may be employed without departing from the principles of the invention described herein.

### DESCRIPTION OF THE INVENTION

Disclosed are systems and methods for constructing and deploying high strength, lightweight, and compact composite ballistic armor for the protection of human wearers.

Embodiments of the present invention are hereafter described in detail with reference to the accompanying Figures. Although the invention has been described and illustrated with a certain degree of particularity, it is understood that the present disclosure has been made only by way of example and that numerous changes in the combination and arrangement of parts can be resorted to by those skilled in the art without departing from the scope of the invention.

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness.

The terms and words used in the following description and claims are not limited to the bibliographical meanings but are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The terminology used herein is for the purpose of describing embodiments only and is not intended to be limiting of the invention. As used herein, the singular forms "a," "an" and "the" are intended to include the plural forms as well, unless the context clearly indicates otherwise. Thus, for example, reference to "a component surface" includes reference to one or more of such surfaces.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present), and B is false (or not present), A is false (or not present), and B is true (or present), and both A and B are true (or present).

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein. Well-known functions or constructions may not be described in detail for brevity and/or clarity.

For the purpose of the present disclosure, the following terms and acronyms are to be interpreted as follows.
**UHMWPE:** Ultra-high-molecular-weight polyethylene is a type of thermoplastic polyethylene comprised of long chains of polyethylene aligned in the same direction. UHMWPE has high impact strength, is water resistant, and is self-lubricating. UHMWPE also has a low melting point resulting in improved energy absorption during ballistic impacts.
**TI6AL4V:** Sometimes called TC4, Ti64, or ASTM Grade 5, TI6AL4V is an alpha-beta titanium alloy with a high strength-to-weight ratio, excellent corrosion resistance, low thermal conductivity, and resistance to extreme temperatures.
**Graphene:** Graphene is an allotrope of carbon characterized as a flat single layer of carbon atoms organized into a hexagonal lattice. Each carbon atom is bonded to its three closest neighbors in the sheet. Graphene possesses several properties, including exceptional tensile strength, and it is the thinnest two-dimensional material yet discovered. The name is a portmanteau of "graphite" and the suffix -ene, reflecting the fact that graphite is another carbon allotrope made up of stacked graphene layers.
**Carbon Nanotube:** A carbon nanotube (CNT), also known as a single-walled carbon nanotube, is another carbon allotrope having a hexagonal lattice of carbon atoms with similar bonds as those of graphene, except the two-dimensional lattice is rolled into a cylindrical shape having a nanometer-scale diameter. Carbon nanotubes also have exceptional tensile strength.
**NIJ:** National Institute of Justice, the governing body that oversees performance standards and testing for ballistic armor. NIJ is the standard by which all commercially available body armor is judged for safety and ballistic stopping power.
**Back face deformation (BFD).** BFD is a measure of the distance a projectile may cause armor plate to deflect into a wearer upon impact.

It will be also understood that when an element is referred to as being "on," "attached" to, "connected" to, "coupled" with, "contacting", "mounted" etc., another element, it can be directly on, attached to, connected to, coupled with or contacting the other element or intervening elements may also be present. In contrast, when an element is referred to as being, for example, "directly on," "directly attached" to, "directly connected" to, "directly coupled" with or "directly contacting" another element, there are no intervening elements present. It will also be appreciated by those of skill in the art that references to a structure or feature that is disposed "adjacent" another feature may have portions that overlap or underlie the adjacent feature.

Spatially relative terms, such as "under," "below," "lower," "over," "upper" and the like, may be used herein for ease of description to describe one element or feature's relationship to another element(s) or feature(s) as illustrated in the figures. It will be understood that the spatially relative terms are intended to encompass different orientations of a device in use or operation in addition to the orientation depicted in the figures. For example, if a device in the figures is inverted, elements described as "under", or "beneath" other elements or features would then be oriented "over" the other elements or features. Thus, the exemplary term "under" can encompass both an orientation of "over" and "under". The device may be otherwise oriented (rotated 90 degrees or at other orientations) and the spatially relative descriptors used herein interpreted accordingly. Similarly, the terms "upwardly," "downwardly," "vertical," "horizontal" and the like are used herein for the purpose of explanation only unless specifically indicated otherwise.

Included in the description are flowcharts depicting examples of the methodology which may be used to construct embodiments of the disclosed ballistic armor system. In the following description, it will be understood that each block of the flowchart illustrations, and combinations of blocks in the flowchart illustrations, can be implemented by computer program instructions, firmware and/or specialized hardware. Accordingly, blocks of the flowchart illustrations support combinations of means for performing the specified functions and combinations of steps for performing the specified functions.

### Armor System Configurations

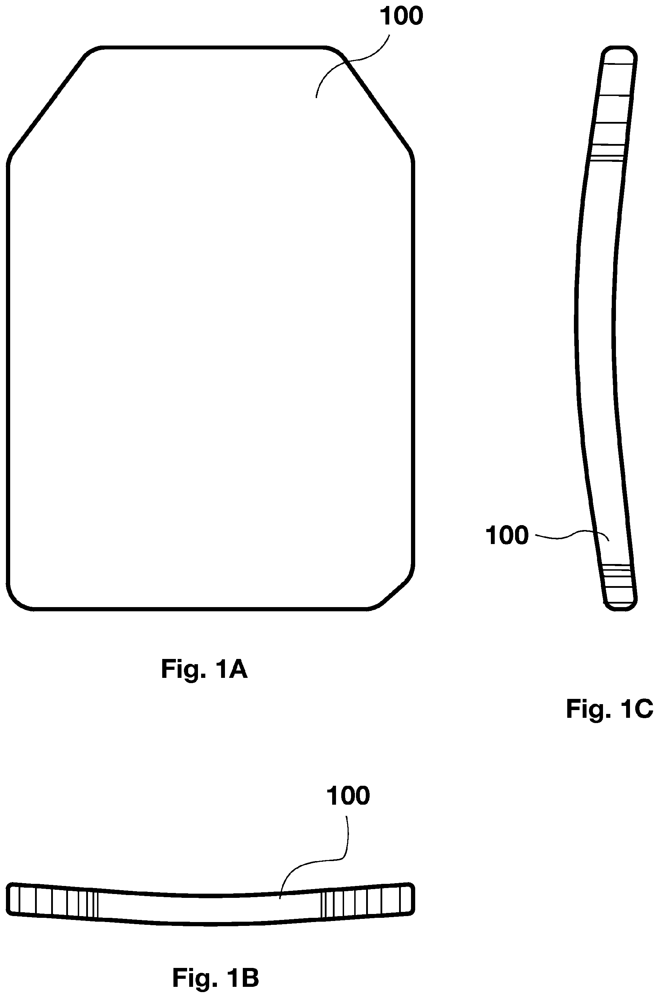

According to one embodiment of the present invention, and as shown below, presents a hybrid ballistic armor that includes plates shaped as shown in Figure 1A. Figure 1A shows an example plate 100 as viewed from the front. The plate is roughly rectangular in shape, having dimensions of 10 inches by 12 inches. Figure 1B shows and example plate 100 as viewed from the top. The plate is approximately, in one embodiment, 9 mm to 15 mm thick, and is curved for more comfortable wear. Figure 1C is a view of the plate from a side, showing a second dimensional curve, also to promote wearability. The disclosed armor plate system weighs approximately 2 to 5 pounds.

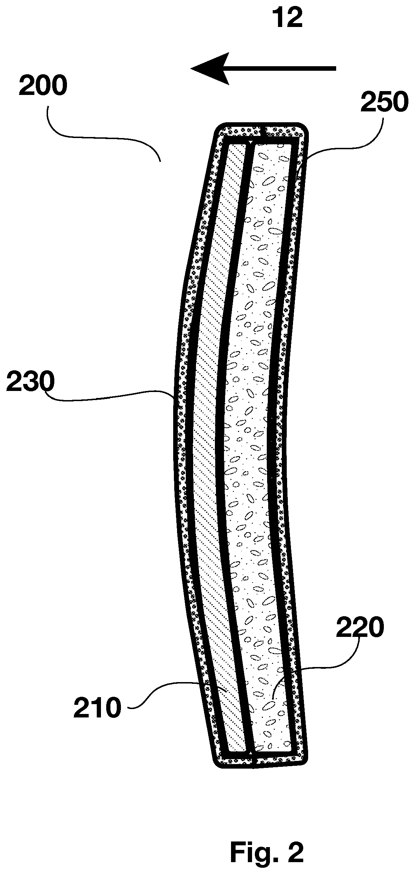

With reference to Figure 2, the disclosed armor plate system 200 is shown oriented facing outward from the wearer in the direction of the arrow 12. Embodiments of the armor plate system include a ballistic core, comprised of a first plate 210 made from a titanium alloy (or the like) and a second plate 220 made from UHMWPE. An example alloy particularly suited for the first plate 210 is a Ti₆Al₄V, Grade 5 titanium alloy, having a hardness of 3400-3500 or at least 2800-2900 as a lower range limit. The titanium alloy is processed in a forge, then stamped and trimmed into a ballistic plate shape that is curved on two-axes. The plate is sized as an equivalent to OWASP Enterprise Security API (ESAPI) size medium, or 10 inches by 12 inches (10" X 12"), with a thickness of 3 millimeters (mm) to 5 mm. Some embodiments may be ESAPI size medium 9.5" X 12.5" or 24 centimeters (cm) by 32 cm. The second plate 220 is made from a NIJ Level 3a-rated ultra-high-molecular-weight polyethylene. The second plate 220 is molded to match the dimensions and curved shape of the first plate 210.

Encasing the ballistic core 210, 220 is an outer shell 230 made from an Aramid/carbon fiber composite. A suitable Aramid/carbon fiber composite fabric may have a honeycomb weave of 3k warp, welp, and tow fibers, with a weight of 6.49 ounces or 220 gsm. Aramid fabric is formed from aromatic polyamide. The fabric provides exceptional impact resistance and good elongation (higher than carbon, but less than glass). Currently, high-performance Aramid fiber has a modulus of approximately 20 Msi, a tensile strength of approximately 500 ksi, and elongation of nearly 3%. Aramid fiber has a breaking tenacity of 3045 MPa which is 5 times that of steel, and 2 times that of glass fiber or nylon. Construction of the outer shell of the present invention using such Aramid/carbon fiber fabrics involves a curing step with a resin, such as a traditional composite resin and/or, in a preferred embodiment, a graphene-infused resin. The outer shell fabric is hand-laid, or vacuum infused with the resin and then placed into a mold under negative pressure or similar process to draw out air bubbles and form one or more graphene layers. The result is then allowed to cure at room temperature, cleaned and trimmed. The outer shell is then ready to receive the ballistic core.

Construction of ballistic core also may include the use of a resin 250 and/or Aramid/carbon fiber composite 230. Once the first plate 210 and second plate 220 are shaped, the interior facing surfaces are coated with the Aramid/carbon fiber composite 230 and/or graphene-infused resin 250, the plates are adhered together, and the resin 250 is allowed to cure forming, in one instance, one or more graphene layers. The graphene-infused resin can include graphene particles or graphene platelets. During the curing / forming process the graphene aligns into a single layer of carbon atoms arranged in a hexagonal lattice forming a graphene layer. The one or more graphene layers are infused within the Aramid/carbon fibers as well as residing between the fabric layers. In one version of the present invention the graphene layers overlap forming a series of plates of graphene bound together by the resin.

In some embodiments of the present invention, a sheet of Aramid/carbon fiber composite fabric 230 is "wetted down" or infused with the resin and layered between the first and second plates. The plates are then adhered together and the resin 250 is allowed to cure, bonding the plates and forming graphene layers. In some embodiments, the plates are simply mated together without a coating or resin or an intervening sheet of Aramid/carbon fiber fabric. Once completed, the ballistic core is inserted into the prepared outer shell. The outer shell is then sealed around the ballistic core using the graphene infused resin, and the resin is allowed to cure.

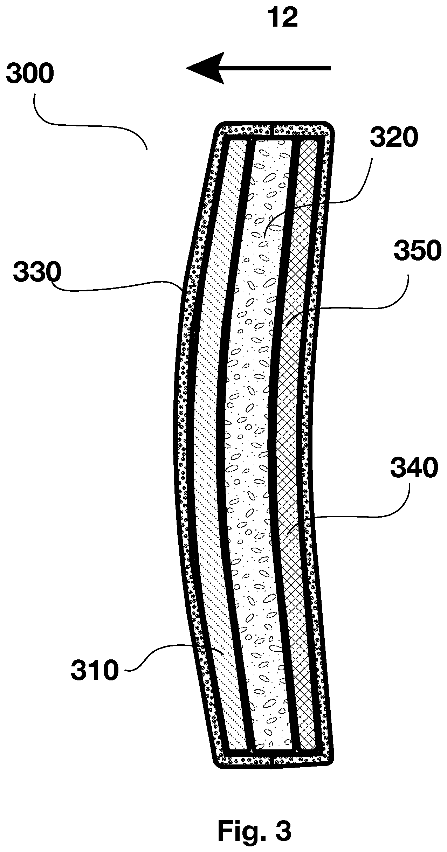

With reference to Figure 3, some embodiments of the disclosed invention include a backer plate 340 made from high energy capacity absorbing material. Several suitable materials may be used for the backer plate, including dilatants, which are shear thickening fluids having non-Newtonian properties. Specifically, dilatants experience an increase in viscosity with the rate of shear strain experienced so that they are soft under normal circumstances but become rigid when struck with high energy. Other suitable materials may be used, such as high-density foam, expanded polystyrene, expanded polypropylene, expanded polyurethane, etc. The backer plate 340 provides increased energy absorption from projectiles striking the front layers of the armor plate, and helps control back face deformation

The backer plate is layered with the first plate 310 and the second plate 320 and assembled into the ballistic core. The backer plate 340 is adhered to the second plate 320 by coating the mating surfaces with a layer of adhesive, resin 350, or in some embodiments a sheet of Aramid/carbon fiber fabric is infused with resin and layered between the second plate 320 and backing layer 340. Once the resin cures and graphene layers are formed, the enhanced ballistic core is inserted into a prepared outer shell. The outer shell 330 is then sealed around the ballistic core using resin 350, and the is resin again allowed to cure forming additional graphene layers.

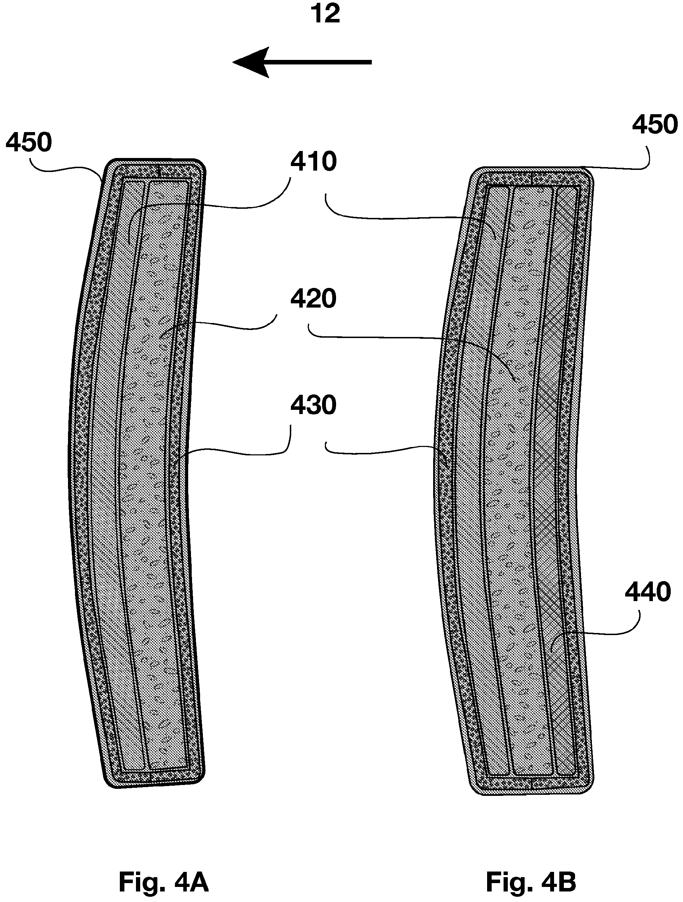

With reference to Figures 4A and 4B, additional embodiments of the disclosed invention are shown wherein the entire armor plate is infused with an additional resin treatment. Figure 4A shows a ballistic core having only a first plate 410 and a second plate 420. The ballistic core is encased in the outer shell 430, and the entire armor plate system is infused with resin 450. Similarly, Figure 4B depicts the ballistic core with a backer plate 440, also enclosed in an outer shell 430 and then infused with resin 450 / graphene layers.

### Armor Component Roles and Performance

The disclosed armor system includes layered plates and materials that each serve different functions, and in combination yield unprecedented performance with low weight, low bulk, and excellent resistance to degradation.

**Outer Shell.** The outer shell provides a rigid outer structure that is ballistically resistant and hydrophobic, as is required for many plate carriers. The outer shell also acts as the first stage in the ballistic projectile stopping system. As an incoming projectile hits the armor plate system, it first encounters the graphene resin-infused outer shell. The outer shell blunts and slows the projectile and contains most or all the projectile fragmentation and spalling caused by the break plate. The outer shell thus begins the process of degrading the round, while providing impact and fragmentation resistance. In some embodiments, the outer shell is comprised of three components, each of which includes three or more layers of Aramid/carbon fiber composite fabric infused with resin.

**Titanium Break Plate.** The disclosed armor system features a titanium break plate that acts as a second stage of the ballistic projectile stopping process. Some embodiments include a break plate with thicknesses ranging, in one embodiment, from 3mm to 5mm. However, break plate thickness may be increased or decreased to achieve stoppage capability for specific ballistic rounds. Similarly, some embodiments use a Ti₆Al₄V Grade 5 titanium alloy, however, titanium grade (hardness) can be adjusted to account for the ballistic properties of specific rounds that need to be defeated by the armor. The titanium (or similar alloy) break plate softens the incoming round by providing an exceptionally dense and rigid surface to defeat the ballistic shape of the round. Contact with the break plate may flatten the round or stop it altogether, depending on the round's caliber and muzzle velocity. The break plate further compromises and shatters the round so that it can be captured by the subsequent layers of the armor.

**UHMWPE Plate.** Next, the disclosed armor system includes a UHMWPE plate layered behind the break plate as the third stage of the projectile stoppage process. Some embodiments include a UHMWPE plate with thicknesses ranging from 6 mm to 12 mm, but plate thickness may be increased or decreased to achieve stoppage capability for specific ballistic rounds. UHMWPE is highly effective at stopping ballistic projectiles. After being blunted and slowed by the outer shell, then softened and broken by the break plate, the projectile next encounters the UHMWPE plate, which can make the final stop of the slowed and fragmented projectile and contain the round from penetrating further into the armor plate system. UHMWPE has a relatively low melting point, allowing it to rapidly soften when flash-heated by projectile impact, and then rapidly re-harden when the material cools. Projectiles and projectile fragments thus embed in the UHMWPE plate and are captured.

**Backer Plate.** Some embodiments of the disclosed armor system include a backer plate layered behind the UHMWPE plate as the fourth stage of the projectile stoppage process. While the ballistic core is designed to completely stop the projectile, the use of a back plate improves the comfort of the wearer and potentially decreases the chance of injury due to back face deformation. The backer plate absorbs and disperses any residual shock from the round that has made it through the ballistic core, and cushions, absorbs, and disperses intrusions by the projectile into or toward the wearer's body.

**Graphene-infused Resin.** Use of graphene-infused resin greatly enhances the performance of the disclosed armor system. Having a thickness of only a single carbon atom, graphene adds a high percentage of strength to other materials without adding substantial bulk or weight. The disclosed system uses layered plates, each having distinct ballistic properties, and applies graphene-infused resin between and around the layers to form graphene layers that strengthen and shape the composite armor. Upon impact, the bonds between the individual layers are broken, dispersing a portion of the impact force, and allowing the projectile to embed in the material without penetrating through. When infused with, layered on, or combined with the Aramid/carbon fiber fabric, the titanium, and the UHMWPE, graphene-infused resin and formed graphene layers radically increases the overall strength and resilience each material, and results in radically improved overall armor system performance. Graphene-infused resin also provides waterproofing for the armor plate making it aquaphobic as well as reduces material degradation from temperature extremes. The armor system of the present invention provides a reduced thermal signature and is indeed substantially thermally neutral, leading to a reduced infrared signature. Lastly the conductive characteristics and RF transparency of the graphene infused resin enables the armor to be RFID compatible and possess the capability to have other electronic sensors integrated throughout.

The armor solution of the present invention is drastically lighter and has a higher strength-to-weight ratio than both ceramic based and steel-based ballistic armor. It is also neutrally buoyant. By layering multiple components having complementary performance characteristics, and assembling them according to disclosed techniques, the disclosed invention provides a substantial decrease in weight and thickness yet maintains or exceeds the NIJ capabilities of existing armor systems. The disclosed armor systems, when compared to ceramic or steel systems, may only be half the thickness of such systems, while matching or exceeding NIJ standards.

These and other implementation methodologies for constructing layered composite ballistic armor can be successfully used as part of the disclosed invention. These implementation methodologies are known within the art and the specifics of their application within the context of the present invention will be readily apparent to one of ordinary skill in the relevant art considering this specification.

Although the invention has been described and illustrated with a certain degree of particularity, it is understood that the present disclosure has been made only by way of example and that numerous changes in the combination and arrangement of parts can be resorted to by those skilled in the art without departing from the scope of the invention.

One embodiment of the present invention for a composite ballistic resistant article includes:
- one or more layers of synthetic aromatic polyamide polymer-based fabric 230, and
- one or more graphene layers 250 wherein each graphene layer is a single layer of carbon atoms arranged in a hexagonal lattice formed upon curing of a graphene infused resin, wherein the graphene infused resin binds the one or more layers of synthetic aromatic polyamide polymer-based fabric 230 to the one or more graphene layers 250.

Other features of the composite ballistic resistant article may include:
- or more polyethylene layers interposed between one of the one or more layers of synthetic aromatic polyamide polymer-based fabric and one of the one or more graphene layers.
- wherein the polyethylene layer comprises UHMWPE.
- wherein the one or more polyethylene layers include ultra-high molecular weight polyethylene.
- a titanium plate interposed between one of the one or more layers of synthetic aromatic polyamide polymer-based fabric and one of the one or more graphene layers.
- wherein the composite ballistic resistant article includes outward facing side and an inward facing side and wherein, and with respect to the outward facing side, the titanium plate is positioned before the one or more polyethylene layers.
- wherein the one or more layers of synthetic aromatic polyamide polymer-based fabric, the one or more graphene layers, the one or more polyethylene layers, and the titanium plate combine into a single multi-curve ballistic resistant article.
- wherein the graphene infused resin is interposed between each of the one or more layers of synthetic aromatic polyamide polymer based fabric, the one or more graphene layers, the one or more polyethylene layers, and the titanium plate and wherein responsive to the graphene infused resin curing at least one of the one or more graphene layers are interposed between each of the one or more layers of synthetic aromatic polyamide polymer based fabric, the one or more polyethylene layers, and the titanium plate.
- wherein the composite ballistic resistant article is aquaphobic.
- wherein the composite ballistic resistant article is neutrally buoyant.
- a backer plate positioned, with respect to the outward facing side, after the one or more polyethylene layers, wherein the backer plate is composed of a high energy capacity absorbing material.
- wherein each of the one or more layers of synthetic aromatic polyamide polymer-based fabric, and the one or more graphene layers wherein each graphene layer are configured as multi-curve plate.
- wherein the one or more layers of synthetic aromatic polyamide polymer-based fabric are each infused with the graphene infused resin.

Another aspect of the present invention is a method for forming composite ballistic resistant article. The method may include, in one embodiment,
- infusing one or more layers of synthetic aromatic polyamide polymer-based fabric with a graphene infused resin; and
- curing the graphene infused resin forming one or more graphene layers wherein each graphene layer is a single layer of carbon atoms arranged in a hexagonal lattice and wherein curing binds the one or more layers of synthetic aromatic polyamide polymer-based fabric to the one or more graphene layers.

Other features of the above method may include:
- interposing one or more polyethylene layers between one of the one or more layers of synthetic aromatic polyamide polymer-based fabric and one of the one or more graphene layers.
- wherein the polyethylene layer comprises UHMWPE.
- wherein the one or more polyethylene layers include ultra-high molecular weight polyethylene.
- interposing a titanium plate between the one of the one or more layers of synthetic aromatic polyamide polymer-based fabric and one of the one or more graphene layers.
- wherein the composite ballistic resistant article includes outward facing side and an inward facing side and wherein, and with respect to the outward facing side, positioning the titanium plate before the one or more polyethylene layers.
- combining the one or more layers of synthetic aromatic polyamide polymer-based fabric, the one or more graphene layers, the one or more polyethylene layers, and the titanium plate into a single multi-curve ballistic resistant article.
- interposing the graphene infused resin between each of the one or more layers of synthetic aromatic polyamide polymer-based fabric, the one or more graphene layers, the one or more polyethylene layers, and the titanium plate.
- positioning a backer plate, with respect to the outward facing side, after the one or more polyethylene layers, wherein the backer plate is composed of a high energy capacity absorbing material.

While there have been described above the principles of the disclosed invention, it is to be clearly understood that the foregoing description is made only by way of example and not as a limitation to the scope of the invention. Particularly, it is recognized that the teachings of the foregoing disclosure will suggest other modifications to those persons skilled in the relevant art. Such modifications may involve other features that are already known per se, and which may be used instead of or in addition to features already described herein. Although claims have been formulated in this application to particular combinations of features, it should be understood that the scope of the disclosure herein also includes any novel feature or any novel combination of features disclosed either explicitly or implicitly or any generalization or modification thereof which would be apparent to persons skilled in the relevant art, whether or not such relates to the same invention as presently claimed in any claim and whether or not it mitigates any or all of the same technical problems as confronted by the present invention. The Applicant hereby reserves the right to formulate new claims to such features and/or combinations of such features during the prosecution of the present application or of any further application derived therefrom.

## Claims

1. A composite ballistic resistant article, comprising: one or more graphene layers (250) wherein each graphene layer is a single layer of carbon atoms arranged in a hexagonal lattice formed upon curing of a graphene infused resin, and **characterised in that** the article further comprises one or more layers of synthetic aromatic polyamide polymer-based fabric (230), and wherein the graphene infused resin binds the one or more layers of synthetic aromatic polyamide polymer-based fabric (230) to the one or more graphene layers (250).

2. The composite ballistic resistant article of claim 1, further comprising one or more polyethylene layers interposed between one of the one or more layers of synthetic aromatic polyamide polymer-based fabric and one of the one or more graphene layers.

3. The composite ballistic resistant article of claim 1, wherein the polyethylene layer comprises UHMWPE.

4. The composite ballistic resistant article of claim 2, wherein the one or more polyethylene layers include ultra-high molecular weight polyethylene and wherein the composite ballistic resistant article includes outward facing side and an inward facing side and wherein, and with respect to the outward facing side, the titanium plate is positioned before the one or more polyethylene layers.

5. The composite ballistic resistant article of claim 2, further comprising a titanium plate interposed between one of the one or more layers of synthetic aromatic polyamide polymer-based fabric and one of the one or more graphene layers.

6. The composite ballistic resistant article of claim 5, wherein the one or more layers of synthetic aromatic polyamide polymer-based fabric, the one or more graphene layers, the one or more polyethylene layers, and the titanium plate combine into a single multi curve ballistic resistant article.

7. The composite ballistic resistant article of claim 5, wherein the graphene infused resin is interposed between each of the one or more layers of synthetic aromatic polyamide polymer based fabric, the one or more graphene layers, the one or more polyethylene layers, and the titanium plate and wherein responsive to the graphene infused resin curing at least one of the one or more graphene layers are interposed between each of the one or more layers of synthetic aromatic polyamide polymer based fabric, the one or more polyethylene layers, and the titanium plate.

8. The composite ballistic resistant article of claim 7, wherein the composite ballistic resistant article is aquaphobic, optionally wherein the composite ballistic resistant article is neutrally buoyant.

9. The composite ballistic resistant article of claim 5, further comprising a backer plate positioned, with respect to the outward facing side, after the one or more polyethylene layers, wherein the backer plate is composed of a high energy capacity absorbing material.

10. The composite ballistic resistant article of claim 1, wherein each of the one or more layers of synthetic aromatic polyamide polymer-based fabric and the one or more graphene layers are as a configured as multi-curve plate, or wherein the one or more layers of synthetic aromatic polyamide polymer-based fabric are each infused with the graphene infused resin.

11. A method for forming composite ballistic resistant article, the method comprising: infusing one or more layers of synthetic aromatic polyamide polymer based fabric with a graphene infused resin; and curing the graphene infused resin forming one or more graphene layers wherein each graphene layer is a single layer of carbon atoms arranged in a hexagonal lattice and wherein curing binds the one or more layers of synthetic aromatic polyamide polymer based fabric to the one or more graphene layers.

12. The method for forming composite ballistic resistant article according to claim 11, further interposing one or more polyethylene layers between one of the one or more layers of synthetic aromatic polyamide polymer-based fabric and one of the one or more graphene layers.

13. The method for forming composite ballistic resistant article according to claim 12, further comprising interposing a titanium plate between the one of the one or more layers of synthetic aromatic polyamide polymer-based fabric and one of the one or more graphene layers.

14. The method for forming composite ballistic resistant article according to claim 13, wherein the composite ballistic resistant article includes outward facing side and an inward facing side and wherein, and with respect to the outward facing side, positioning the titanium plate before the one or more polyethylene layers.

15. The method for forming composite ballistic resistant article according to claim 14, further comprising one of:
combining the one or more layers of synthetic aromatic polyamide polymer-based fabric, the one or more graphene layers, the one or more polyethylene layers, and the titanium plate into a single multi-curve ballistic resistant article, or
interposing the graphene infused resin between each of the one or more layers of synthetic aromatic polyamide polymer-based fabric, the one or more graphene layers, the one or more polyethylene layers, and the titanium plate, or
positioning a backer plate, with respect to the outward facing side, after the one or more polyethylene layers, wherein the backer plate is composed of a high energy capacity absorbing material.

## Patentansprüche

1. Ein schusssicherer Verbundartikel, beinhaltend: eine oder mehrere Graphenschichten (250), wobei jede Graphenschicht eine einzige beim Aushärten eines mit Graphen infundierten Harzes gebildete Schicht aus in einem Sechskantgitter angeordneten Kohlenstoffatomen ist, und **dadurch gekennzeichnet, dass** der Artikel ferner eine oder mehrere Schichten aus Textilstoff (230) auf Basis von synthetischem aromatischem Polyamidpolymer beinhaltet, und wobei das mit Graphen infundierte Harz die eine oder die mehreren Schichten aus Textilstoff (230) auf Basis von synthetischem aromatischem Polyamidpolymer an die eine oder die mehreren Graphenschichten (250) bindet.

2. Schusssicherer Verbundartikel gemäß Anspruch 1, ferner beinhaltend eine oder mehrere Polyethylenschichten, die zwischen einer der einen oder der mehreren Schichten aus Textilstoff auf Basis von synthetischem aromatischem Polyamidpolymer und einer der einen oder der mehreren Graphenschichten angeordnet sind.

3. Schusssicherer Verbundartikel gemäß Anspruch 1, wobei die Polyethylenschicht UHMWPE beinhaltet.

4. Schusssicherer Verbundartikel gemäß Anspruch 2, wobei die eine oder die mehreren Polyethylenschichten Polyethylen ultrahohen Molekulargewichts umfassen und wobei der schusssichere Verbundartikel eine nach außen weisende Seite und eine nach innen weisende Seite umfasst und wobei, und in Bezug auf die nach außen weisende Seite, die Titanplatte vor der einen oder den mehreren Polyethylenschichten positioniert ist.

5. Schusssicherer Verbundartikel gemäß Anspruch 2, ferner beinhaltend eine Titanplatte, die zwischen einer der einen oder der mehreren Schichten aus Textilstoff auf Basis von synthetischem aromatischem Polyamidpolymer und einer der einen oder der mehreren Graphenschichten angeordnet ist.

6. Schusssicherer Verbundartikel gemäß Anspruch 5, wobei die eine oder die mehreren Schichten aus Textilstoff auf Basis von synthetischem aromatischem Polyamidpolymer, die eine oder die mehreren Graphenschichten, die eine oder die mehreren Polyethylenschichten und die Titanplatte zu einem einzigen mehrfach gekrümmten schusssicheren Artikel kombiniert sind.

7. Schusssicherer Verbundartikel gemäß Anspruch 5, wobei das mit Graphen infundierte Harz zwischen jeder der einen oder der mehreren Schichten aus Textilstoff auf Basis von synthetischem aromatischem Polyamidpolymer, der einen oder der mehreren Graphenschichten, der einen oder der mehreren Polyethylenschichten und der Titanplatte angeordnet ist und wobei als Reaktion auf das Aushärten des mit Graphen infundierten Harzes mindestens eine der einen oder der mehreren Graphenschichten zwischen jeder der einen oder der mehreren Schichten aus Textilstoff auf Basis von synthetischem aromatischem Polyamidpolymer, der einen oder der mehreren Polyethylenschichten und der Titanplatte angeordnet ist.

8. Schusssicherer Verbundartikel gemäß Anspruch 7, wobei der schusssichere Verbundartikel hydrophob ist, wobei der schusssichere Verbundartikel optional auftriebsneutral ist.

9. Schusssicherer Verbundartikel gemäß Anspruch 5, ferner beinhaltend eine Grundplatte, die in Bezug auf die nach außen weisende Seite hinter der einen oder den mehreren Polyethylenschichten positioniert ist, wobei die Grundplatte aus einem hohe Energiekapazität absorbierenden Material besteht.

10. Schusssicherer Verbundartikel gemäß Anspruch 1, wobei jede der einen oder der mehreren Schichten aus Textilstoff auf Basis von synthetischem aromatischem Polyamidpolymer und der einen oder der mehreren Graphenschichten als mehrfach gekrümmte Platte konfiguriert ist oder wobei die eine oder die mehreren Schichten aus Textilstoff auf Basis von synthetischem aromatischem Polyamidpolymer jeweils mit dem mit Graphen infundierten Harz infundiert sind.

11. Ein Verfahren zum Bilden eines schusssicheren Verbundartikels, wobei das Verfahren Folgendes beinhaltet: Infundieren einer oder mehrerer Schichten aus Textilstoff auf Basis von synthetischem aromatischem Polyamidpolymer mit einem mit Graphen infundierten Harz; und Aushärten des mit Graphen infundierten Harzes, sodass eine oder mehrere Graphenschichten gebildet werden, wobei jede Graphenschicht eine einzige Schicht aus in einem Sechskantgitter angeordneten Kohlenstoffatomen ist und wobei das Aushärten die eine oder die mehreren Schichten aus Textilstoff auf Basis von synthetischem aromatischem Polyamidpolymer an die eine oder die mehreren Graphenschichten bindet.

12. Verfahren zum Bilden eines schusssicheren Verbundartikels gemäß Anspruch 11, ferner Anordnen einer mehrerer Polyethylenschichten zwischen einer der einen oder der mehreren Schichten aus Textilstoff auf Basis von synthetischem aromatischem Polyamidpolymer und einer der einen oder der mehreren Graphenschichten.

13. Verfahren zum Bilden eines schusssicheren Verbundartikels gemäß Anspruch 12, ferner beinhaltend das Anordnen einer Titanplatte zwischen der einen der einen oder der mehreren Schichten aus Textilstoff auf Basis von synthetischem aromatischem Polyamidpolymer und einer der einen oder der mehreren Graphenschichten.

14. Verfahren zum Bilden eines schusssicheren Verbundartikels gemäß Anspruch 13, wobei der schusssichere Verbundartikel eine nach außen weisende Seite und eine nach innen weisende Seite umfasst und wobei in Bezug auf die nach außen weisende Seite das Positionieren der Titanplatte vor der einen oder den mehreren Polyethylenschichten ist.

15. Verfahren zum Bilden eines schusssicheren Verbundartikels gemäß Anspruch 14, ferner beinhaltend eines der Folgenden:
Kombinieren der einen oder der mehreren Schichten aus Textilstoff auf Basis von synthetischem aromatischem Polyamidpolymer, der einen oder der mehreren Graphenschichten, der einen oder der mehreren Polyethylenschichten und der Titanplatte zu einem einzigen mehrfach gekrümmten schusssicheren Artikel oder Anordnen des mit Graphen infundierten Harzes zwischen jeder der einen oder der mehreren Schichten aus Textilstoff auf Basis von synthetischem aromatischem Polyamidpolymer, der einen oder der mehreren Graphenschichten, der einen oder der mehreren Polyethylenschichten und der Titanplatte oder
Positionieren einer Grundplatte in Bezug auf die nach außen weisende Seite hinter der einen oder den mehreren Polyethylenschichten, wobei die Grundplatte aus einem hohe Energiekapazität absorbierenden Material besteht.

## Revendications

1. Un article à résistance balistique composite, comprenant : une ou plusieurs couches de graphène (250), chaque couche de graphène étant une unique couche d'atomes de carbone agencés en une grille hexagonale formée lors du durcissement d'une résine infusée de graphène, et **caractérisé en ce que** l'article comprend en outre une ou plusieurs couches de tissu à base de polymère polyamide aromatique synthétique (230), et où la résine infusée de graphène lie les une ou plusieurs couches de tissu à base de polymère polyamide aromatique synthétique (230) aux une ou plusieurs couches de graphène (250).

2. L'article à résistance balistique composite de la revendication 1, comprenant en outre une ou plusieurs couches de polyéthylène intercalées entre une couche des une ou plusieurs couches de tissu à base de polymère polyamide aromatique synthétique et une couche des une ou plusieurs couches de graphène.

3. L'article à résistance balistique composite de la revendication 1, où la couche de polyéthylène comprend de l'UHMWPE.

4. L'article à résistance balistique composite de la revendication 2, où les une ou plusieurs couches de polyéthylène incluent du polyéthylène de masse moléculaire très élevée et où l'article à résistance balistique composite inclut un côté tourné vers l'extérieur et un côté tourné vers l'intérieur et où, et par rapport au côté tourné vers l'extérieur, la plaque de titane est positionnée avant les une ou plusieurs couches de polyéthylène.

5. L'article à résistance balistique composite de la revendication 2, comprenant en outre une plaque de titane intercalée entre une couche des une ou plusieurs couches de tissu à base de polymère polyamide aromatique synthétique et une couche des une ou plusieurs couches de graphène.

6. L'article à résistance balistique composite de la revendication 5, où les une ou plusieurs couches de tissu à base de polymère polyamide aromatique synthétique, les une ou plusieurs couches de graphène, les une ou plusieurs couches de polyéthylène, et la plaque de titane se combinent en un unique article à résistance balistique multicourbe.

7. L'article à résistance balistique composite de la revendication 5, où la résine infusée de graphène est intercalée entre chaque élément parmi les une ou plusieurs couches de tissu à base de polymère polyamide aromatique synthétique, les une ou plusieurs couches de graphène, les une ou plusieurs couches de polyéthylène, et la plaque de titane et où en conséquence du durcissement de la résine infusée de graphène, au moins une couche des une ou plusieurs couches de graphène est intercalée entre chaque élément parmi les une ou plusieurs couches de tissu à base de polymère polyamide aromatique synthétique, les une ou plusieurs couches de polyéthylène, et la plaque de titane.

8. L'article à résistance balistique composite de la revendication 7, l'article à résistance balistique composite étant hydrophobe, facultativement l'article à résistance balistique composite étant à flottabilité neutre.

9. L'article à résistance balistique composite de la revendication 5, comprenant en outre une plaque de support positionnée, par rapport au côté tourné vers l'extérieur, après les une ou plusieurs couches de polyéthylène, la plaque de support étant composée d'un matériau absorbant à capacité haute énergie.

10. L'article à résistance balistique composite de la revendication 1, où chaque couche parmi les une ou plusieurs couches de tissu à base de polymère polyamide aromatique synthétique et les une ou plusieurs couches de graphène est configurée en plaque multicourbe, ou bien où les une ou plusieurs couches de tissu à base de polymère polyamide aromatique synthétique sont infusées chacune avec la résine infusée de graphène.

11. Un procédé pour la formation d'un article à résistance balistique composite, le procédé comprenant : l'infusion d'une ou de plusieurs couches de tissu à base de polymère polyamide aromatique synthétique avec une résine infusée de graphène ; et le durcissement de la résine infusée de graphène formant une ou plusieurs couches de graphène, chaque couche de graphène étant une unique couche d'atomes de carbone agencés en une grille hexagonale, et le durcissement liant les une ou plusieurs couches de tissu à base de polymère polyamide aromatique synthétique aux une ou plusieurs couches de graphène.

12. Le procédé pour la formation d'un article à résistance balistique composite selon la revendication 11, intercalant en outre une ou plusieurs couches de polyéthylène entre une couche des une ou plusieurs couches de tissu à base de polymère polyamide aromatique synthétique et une couche des une ou plusieurs couches de graphène.

13. Le procédé pour la formation d'un article à résistance balistique composite selon la revendication 12, comprenant en outre l'intercalage d'une plaque de titane entre l'une couche des une ou plusieurs couches de tissu à base de polymère polyamide aromatique synthétique et une couche des une ou plusieurs couches de graphène.

14. Le procédé pour la formation d'un article à résistance balistique composite selon la revendication 13, l'article à résistance balistique composite incluant un côté tourné vers l'extérieur et un côté tourné vers l'intérieur et où, par rapport au côté tourné vers l'extérieur, le positionnement de la plaque de titane se fait avant les une ou plusieurs couches de polyéthylène.

15. Le procédé pour la formation d'un article à résistance balistique composite selon la revendication 14, comprenant en outre une action parmi :
la combinaison des une ou plusieurs couches de tissu à base de polymère polyamide aromatique synthétique, des une ou plusieurs couches de graphène, des une ou plusieurs couches de polyéthylène, et de la plaque de titane en un unique article à résistance balistique multicourbe, ou
l'intercalage de la résine infusée de graphène entre chaque élément parmi les une ou plusieurs couches de tissu à base de polymère polyamide aromatique synthétique, les une ou plusieurs couches de graphène, les une ou plusieurs couches de polyéthylène, et la plaque de titane, ou
le positionnement d'une plaque de support, par rapport au côté tourné vers l'extérieur, après les une ou plusieurs couches de polyéthylène, la plaque de support étant composée d'un matériau absorbant à capacité haute énergie.
